Europäisches Patentamt

European Patent Office

Office européen des brevets

(11) Numéro de publication: **0 387 514**
**A2**

## (12) DEMANDE DE BREVET EUROPEEN

(21) Numéro de dépôt: 90101866.3

(22) Date de dépôt: 31.01.90

(51) Int. Cl.⁵: **F16K 1/24, F16K 5/20**

(30) Priorité: **17.03.89 LU 87482**

(43) Date de publication de la demande:
**19.09.90 Bulletin 90/38**

(84) Etats contractants désignés:
**BE ES FR IT NL**

(71) Demandeur: **PAUL WURTH S.A.**
**32 rue d'Alsace**
**L-1122 Luxembourg(LU)**

(72) Inventeur: **Loutsch, Jeannot**
**16 Ceinture des Rosiers**
**L-2446 Howald(LU)**
Inventeur: **Maillet, Pierre**
**1 Allée Drosbach**
**L-1423 Howald(LU)**
Inventeur: **Ulveling. Léon**
**30 rue J. Peffer**
**L-2319 Howald(LU)**
Inventeur: **Lonardi, Emile**
**30 rue de Schouweiler**
**L-4945 Bascharage(LU)**
Inventeur: **Schmit, Louis**
**39 rue Th. Eberhardt**
**L-1451 Luxembourg(LU)**

(74) Mandataire: **Meyers, Ernest et al**
**Office de Brevets FREYLINGER & ASSOCIES**
**B.P. 1 321, route d'Arlon**
**L-8001 Strassen(LU)**

(54) **Dispositif d'obturation de conduites de transport de produits en vrac.**

(57) Le dispositif comporte un boîtier (10) avec une ouverture de passage circulaire, un élément de fermeture (28) monté de manière pivotante dans le boîtier (10), un joint d'étanchéité annulaire (30) entourant ladite ouverture et pouvant coopérer avec la partie périphérique de l'élément de fermeture (28). Le joint (30) est monté sur un support fixe et l'élément de fermeture (20) est déplaçable suivant un axe perpendiculaire à son axe de pivotement. Le dispositif est prévu plus particulièrement pour des conduites de transport de charbon en poudre.

FIG.1

EP 0 387 514 A2

# DISPOSITIF D'OBTURATION DE CONDUITES DE TRANSPORT DE PRODUITS EN VRAC

La présente invention concerne un dispositif d'obturation de conduites de transport de produits en vrac comprenant un boîtier avec une ouverture de passage circulaire, un élément de fermeture monté de manière pivotante dans ledit boîtier, des moyens pour faire pivoter ledit élément de fermeture entre une position de fermeture transversale par rapport à ladite ouverture de passage et une position latérale de dégagement de l'ouverture, ainsi qu'un joint d'étanchéité circulaire entourant ladite ouverture et pouvant coopérer avec la partie périphérique de l'élément de fermeture.

Dans un dispositif d'obturation de ce genre, il faut, dans la mesure du possible, éviter, lors de la manoeuvre de l'organe de fermeture, le frottement de celui-ci sur le joint d'étanchéité afin d'éviter une usure rapide de celui-ci. A cet effet, le document DE-A1-3544609 propose un dispositif d'obturation dont le joint est monté sur un support annulaire qui est déplaçable axialement vers l'élément de fermeture sous l'action d'un fluide pneumatique. Le support du joint est donc conçu sous forme d'un vérin pneumatique annulaire qui est délimité radialement par un compensateur à soufflet intérieur et un compensateur à soufflet extérieur. L'application du joint sur l'élément de fermeture est réalisé par la mise sous pression de vérin pneumatique, le déplacement du joint étant permis par la détente des ondulations des deux compensateurs. Pour le déplacement en sens inverse, le vérin pneumatique est aéré et on utilise l'élasticité naturelle des ondulations du compensateur pour soulever le joint de l'élément de fermeture. Or, en attribuant au compensateur des fonctions de ressort, ce qui n'est pas sa première vocation, il faut tenir compte du fait que, contrairement à un ressort, un compensateur ne peut pas être précontraint, de sorte qu'il faut un certain nombre d'ondulations pour assurer le déplacement souhaité, ce qui augmente la hauteur du vérin pneumatique annulaire.

Ces dispositifs qui sont notamment utilisés dans des systèmes de transports pneumatiques, comme p.ex. du charbon en poudre, doivent pouvoir contenir la pression aussi bien en amont qu'en aval de l'élément de fermeture. Dans le dispositif connu, la surface du support du joint qui est exposée à la pression dans le boîtier correspond sensiblement à la surface annulaire subissant l'action du fluide pneumatique, notamment en cas d'usure des joints. Pour pouvoir assurer une bonne fermeture contre la pression à l'intérieur du boîtier, il faut que la pression du fluide pneumatique soit sensiblement supérieure à la pression du système de transport pneumatique, d'autant plus qu'il faut vaincre la force de traction du compensateur qui a lieu en sens contraire. Autrement dit, le dispositif connu ne permet pas de se servir de la station de pressurisation principale du système de transport pour actionner le vérin pneumatique, étant donné qu'il faut une pression supérieure. Il faut donc un compresseur séparé pour actionner le vérin pneumatique.

Le but de la présente invention est de prévoir un dispositif d'obturation perfectionné qui ne présente pas les inconvénients décrits ci-dessus. Pour atteindre cet objectif, la présente invention propose un dispositif d'obturation du genre décrit dans le préambule qui est essentiellement caractérisé en ce que le joint est monté sur un support fixe et en ce que l'élément de fermeture est déplaçable suivant un axe perpendiculaire à son axe de pivotement.

L'élément de fermeture comporte une calotte sphérique portée par un piston coulissant axialement dans un support qui pivote autour d'un axe transversal du boîtier. Une fermeture étanche est prévue entre le bord de cette calotte et le support pour définir une première chambre étanche entre la calotte et le support, cette chambre étant reliée à travers le support à une source de fluide pneumatique dont la pression soulève la calotte de son support.

Selon un premier mode de réalisation, un ressort est prévu autour dudit piston et l'action de ce ressort est opposée à celle du fluide pneumatique.

L'étanchéité entre la bord de la calotte et le support peut être réalisée par l'intermédiaire d'un compensateur cylindrique.

Selon un autre mode de réalisation, le support comporte une tête à surface sphérique qui s'étend en-dessous de ladite calotte sphérique et dont le bord périphérique est en contact frottant, par l'intermédiaire d'un joint d'étanchéité, avec la surface intérieure d'une jupe cylindrique extérieure faisant partie du bord périphérique de la calotte sphérique.

Un élément annulaire fixé par son bord extérieur à ladite jupe cylindrique s'étend en-dessous de ladite tête du support et le bord intérieur de cette tête est relié au support par un compensateur définissant avec la surface inférieure de la tête du support une seconde chambre étanche reliée à travers le support à une source de fluide pneumatique dont la pression maintient la calotte sur le support. Les deux chambres pneumatiques peuvent être reliées à la même source de fluide pneumatique à travers une vanne de commutation.

Le dispositif comporte, en outre, un racloir cylindrique, disposé coaxialement à l'intérieur du joint et déplaçable axialement grâce à une fixation élastique.

D'autres particularités et caractéristiques ressortiront de la description détaillée de plusieurs modes de réalisation avantageux présentés ci-dessous, à titre d'illustration, en référence aux dessins annexés dans lesquels:

La fig. 1 représente une vue schématique générale en coupe axiale, d'un dispositif d'obturation selon la présente invention;

Les figs. 2 et 3 représentent chacune une vue schématique latérale, partiellement en coupe, montrant respectivement l'élément de fermeture en position fermée et en position ouverte;

La fig. 4 montre schématiquement une coupe axiale à travers un premier mode de réalisation;

Les figs. 5 et 6 montrent schématiquement des coupes axiales partielles d'un second mode de réalisation illustrant respectivement la calotte dans deux positions axiales différentes.

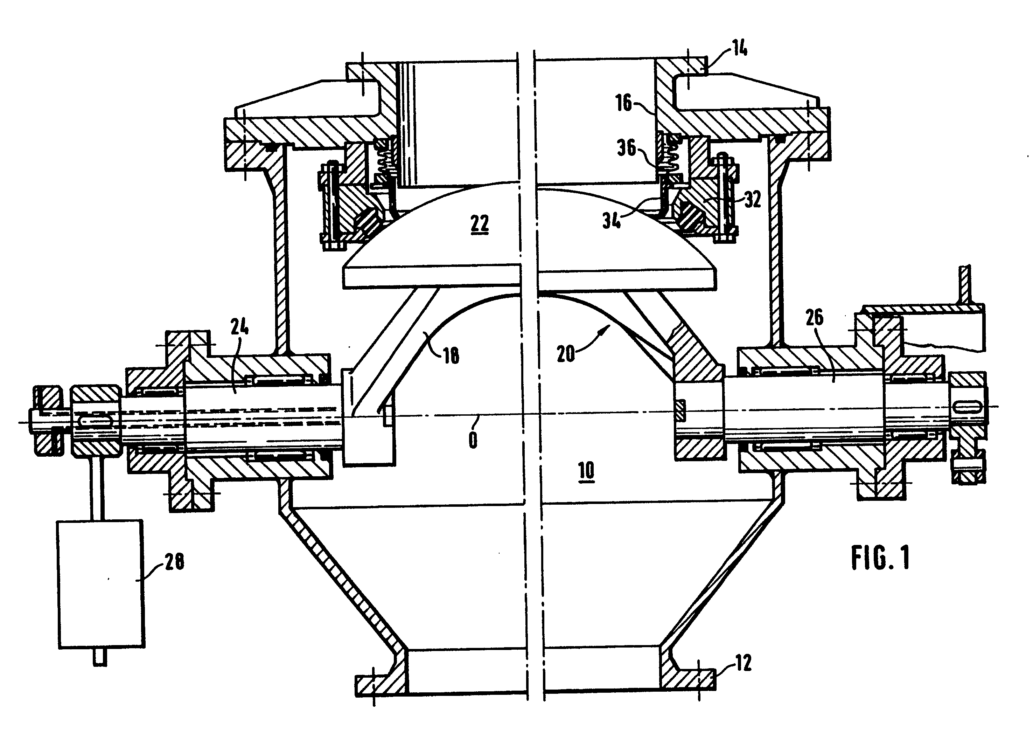

Le dispositif représenté à la fig. 1 comporte un boîtier 10 pourvu de deux brides opposées 12, 14 pour être connecté dans une conduite d'écoulement de produits en vrac, comme p.ex. de la poudre de charbon. La partie supérieure du boîtier 10 est conçue sous forme de tubulure 16 destinée à être fermée ou ouverte à l'aide d'un élément de fermeture 20. Cet élément de fermeture 20 comporte une calotte sphérique 22 montée sur un support pivotant 18 qui est porté par deux arbres 24, 26 qui sont logés et supportés dans des paliers opposés du boîtier 10 de manière à permettre à l'élément de fermeture 20 de pivoter autour de son axe horizontal O entre la position fermée selon la fig. 1 et une position d'ouverture décalée de 90°.

L'un des arbres du support, p.ex. l'arbre 26 est soumis, à l'extérieur du boîtier 10, à un mécanisme d'entraînement pour faire pivoter l'élément de fermeture 20, tandis que l'autre arbre 24 porte à l'extérieur du boîtier 10 un poids 28 qui est supérieur au poids de l'élément de fermeture 22 afin d'assurer à celui-ci une position stable dans la position fermée lorsque les moyens d'entraînement tombent en panne.

L'étanchéité de l'élément de fermeture 20 est assurée, en position fermée, par un joint annulaire 30 logé dans un support 32 fixé au boîtier 10, le support 32 étant conçu pour permettre un démontage rapide et facile du joint 30. Pour assurer l'étanchéité et permettre en même temps le pivotement de la calotte 22, celle-ci est déplaçable axialement par rapport à son support 18. Quoiqu'il s'agisse de la même calotte 22 représentée à gauche et à droite de l'axe vertical sur la fig. 1, la partie gauche a été représentée, à des fins d'illustration, en position relevée, appliquée de manière étanche contre le joint 30, tandis que la partie à droite a été représentée en position abaissée, à l'écart du joint 30 pour permettre le pivotement de la calotte 22 autour de l'axe horizontal O.

Un racloir cylindrique 34 est de préférence monté axialement à l'intérieur du joint 30. Ce racloir 34 est supporté par le boîtier 10, par des moyens élastiques, qui sont, dans l'exemple illustré, un compensateur 36 et qui refoule le racloir 34 élastiquement contre la surface de la calotte 22. Cette mesure est destinée à protéger le joint 30 contre les croutes de matière restant accrochées sur la calotte 22 et qui sont décrochées par le racloir 34 lors du mouvement de la calotte 22.

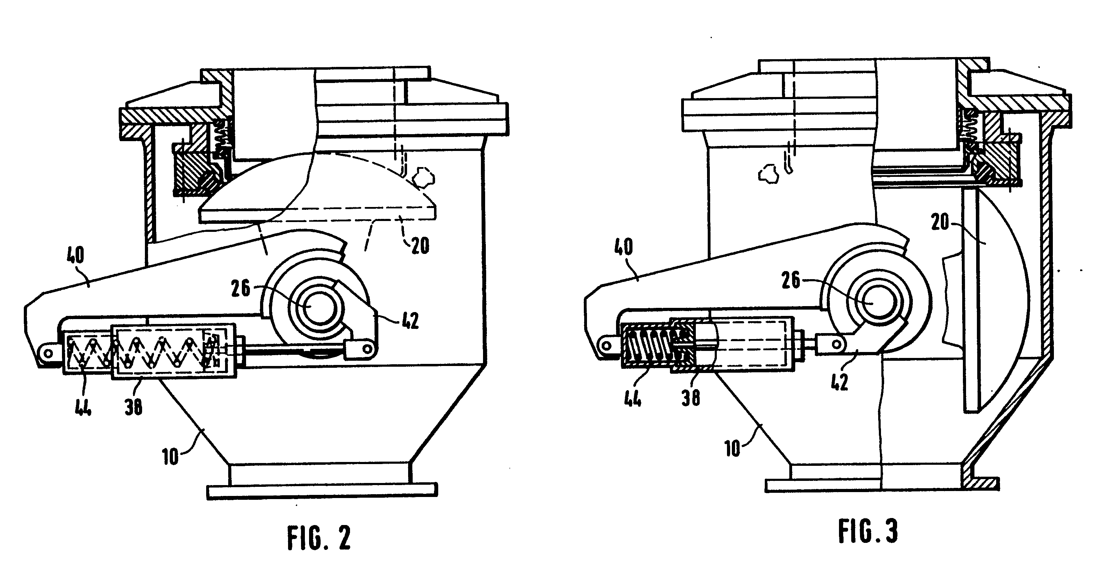

Les figs. 2 et 3 illustrent schématiquement le mécanisme pour actionner l'obturateur 20. Ce mécanisme comporte un vérin 38, ou autre moyen d'entraînement, qui est monté entre une console 40 solidaire du boîtier 10 et un bras 42 fixé sur l'arbre 26. Comme il ressort des figures, la fermeture de l'obturateur 20, c.à.d. le pivotement de l'obturateur 20 de la position de la fig. 3 vers la position de la fig. 2 est réalisé par dégagement de la tige de piston du cylindre du vérin 38, l'ouverture étant réalisée par l'opération inverse.

Comme le montrent les figs. 2 et 3, un ressort hélicoïdal 44 est prévu à l'intérieur du vérin 38 et l'action de ce ressort 44 contribue à la fermeture de l'obturateur 20 et s'oppose à son ouverture. Ce ressort 44 est prévu en association ou en remplacement du poids 28 de la fig. 1 et sa puissance, éventuellement associée à celle du poids 28, est suffisante pour fermer l'obturateur en cas de panne du vérin 38.

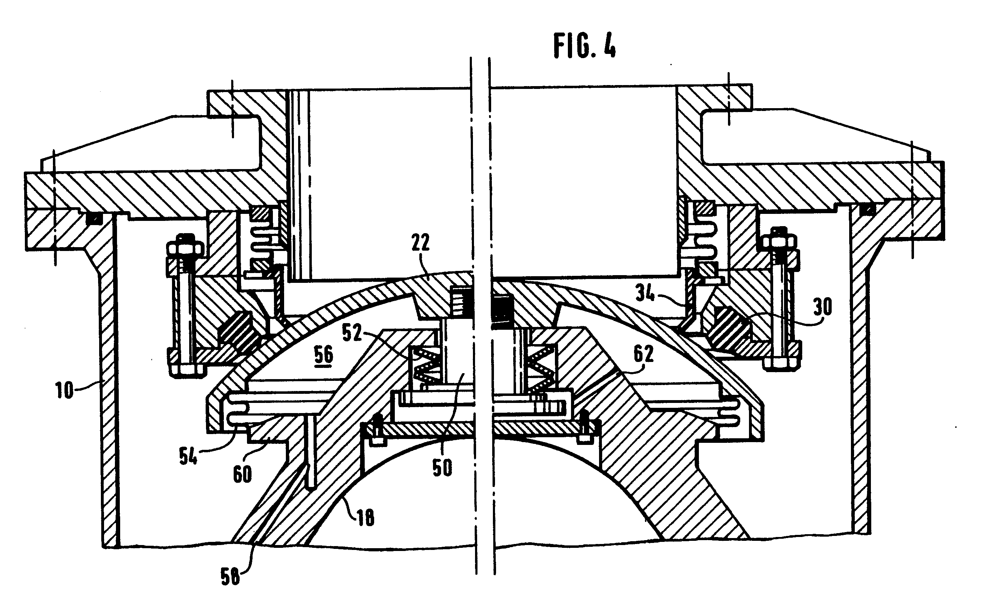

La fig. 4 montre un premier mode de réalisation pour soulever la calotte sphérique 22 et l'appliquer de manière étanche contre le siège 30, la partie gauche de la figure représentant la calotte en position soulevée, tandis que la partie droite montre la calotte en position abaissée. Cette calotte 22 est portée par un piston 50 qui est monté axialement, de façon coulissante, au centre du support 18. Ce piston 50 est associé à un ressort 52, p.ex. un ressort hélicoïdal ou un ressort du type BELLEVILLE, dont l'action maintient la calotte 22 dans la position illustrée dans la partie droite de la figure. La partie périphérique de la calotte 22 est reliée de manière étanche au support 18 par l'intermédiaire d'un compensateur 54 qui permet un déplacement axial de la calotte 22. Au lieu du compensateur 54 il est également possible de prévoir un joint d'étanchéité, car l'espace défini entre la calotte 22 et le support 18 est constitué sous forme de chambre pneumatique 56 qui est reliée par un canal 58 à travers le support 18 a une source de fluide pneumatique. La mise sous pression de cette chambre 56 soulève la calotte 22 contre l'action du ressort 52 jusque dans la position illustrée à gauche de la fig. 4. Pour soulager le joint 30, ce mouvement est, de préférence, limité par un épaulement 60 qui forme une butée avec le support 18.

En vue de l'ouverture, il faut enlever la calotte 22 du joint 30 et, à cet effet, il suffit d'aérer la chambre 56 pour permettre au ressort 52 d'appliquer la calotte 22 sur son assise. Pour éviter un effet de pompage dans l'espace autour du piston 50, cet espace est, de préférence, relié à la chambre 56 par un canal 62 dans le support 18.

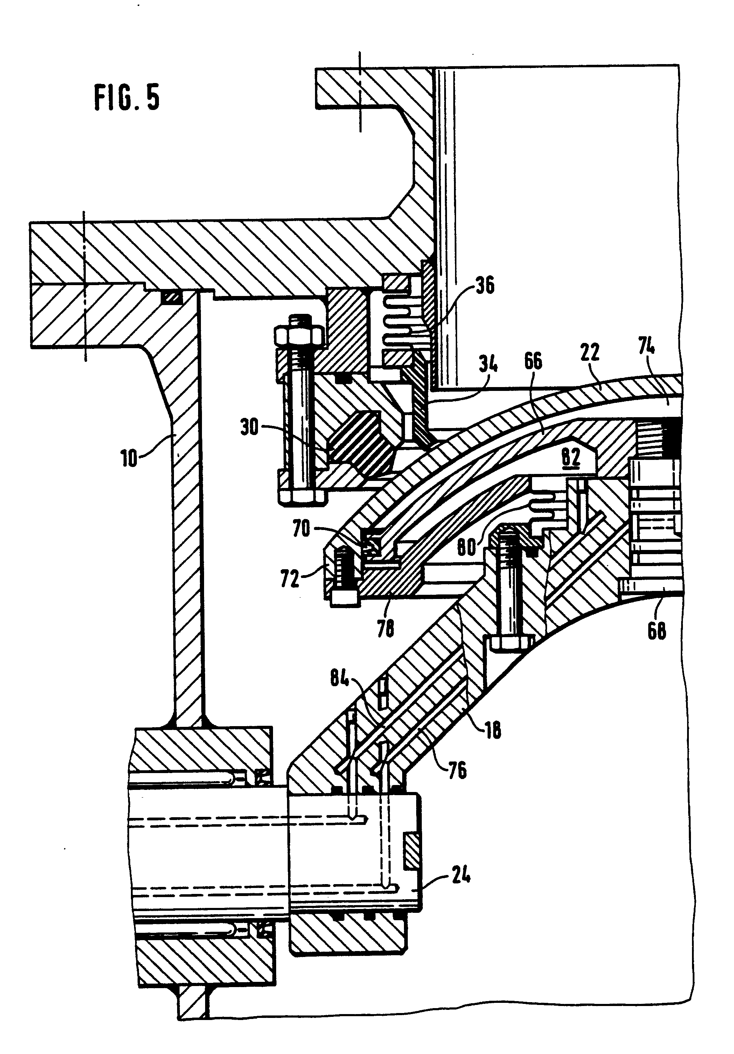

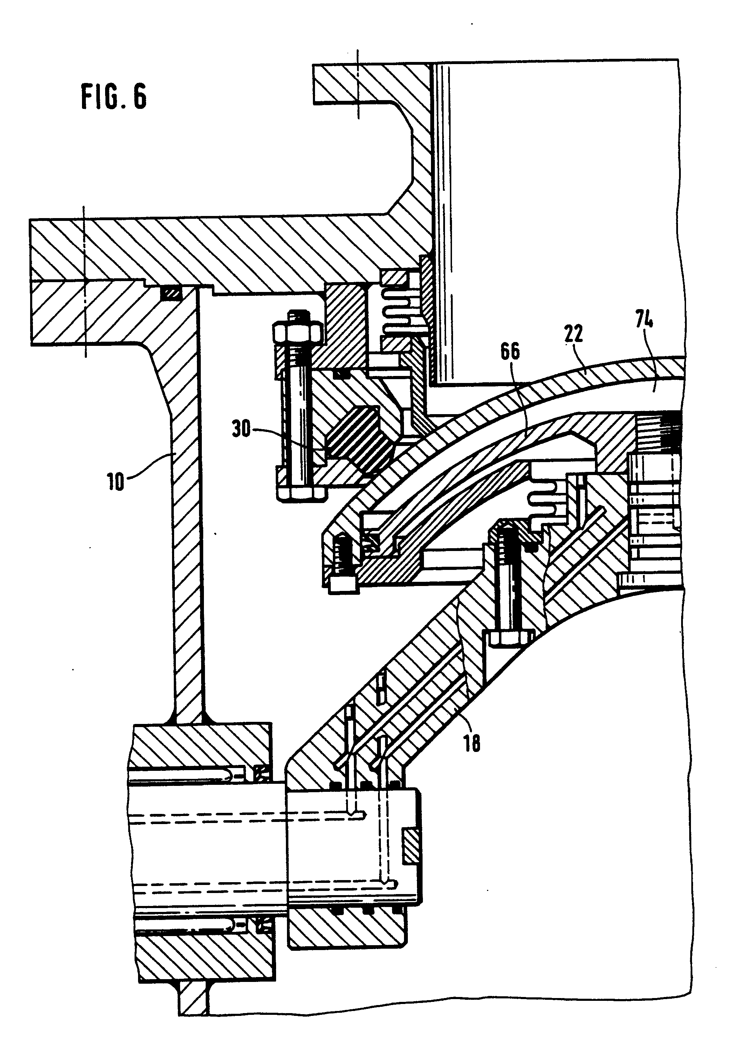

Les figs. 5 et 6 montrent un deuxième mode de réalisation pour soulever la calotte 22 de son support 18 et l'appliquer de manière étanche contre le joint annulaire 30. Dans ce mode de réalisation, un piston 66 à surface sphérique est fixé, de manière démontable, à l'aide d'un manchon fileté 68 sur le support 18. Ce piston sphérique 66 s'étend en-dessous de la calotte sphérique 22 et son bord extérieur est pourvu d'un joint d'étanchéité périphérique 70 qui coopère avec la surface cylindrique intérieure d'une jupe périphérique 72 faisant partie de la calotte 22. L'espace formé entre la calotte 22 et le piston 66 constitue une première chambre 74 dont l'étanchéité est assurée par le joint 70, qui permet, néanmoins, un déplacement axial de la calotte 22 par rapport au piston 66 sans que l'étanchéité soit perturbée. Cette chambre 74 est reliée par un canal 76 à travers l'arbre 24, le support 18 et le manchon fileté 68 de sorte que la mise sous pression de la chambre 74 à l'aide d'un fluide pneumatique, soulève la calotte 22 de son support 18 pour l'appliquer contre le joint 30 comme représenté sur la fig. 6.

Un élément annulaire 78, également à surface sphérique, est vissé sur le bord de la jupe 72 de la calotte 22. Cet élément annulaire 78 s'étend en-dessous du piston sphérique 66 et son bord intérieur est relié par un compensateur cylindrique 80 au support 18, de manière à définir une seconde chambre 82 entre l'élément 78 et le piston sphérique 66, l'étanchéité de cette chambre étant assurée par le joint 70 et le compensateur 80. Cette seconde chambre pneumatique 82 est reliée par un canal 84 évoluant également à travers le support 18 et l'arbre 24 à une source de fluide pneumatique. La mise sous pression de cette chambre 82 exerce une force verticale sur l'élément annulaire 78 tendant à maintenir la calotte sur le support 18, selon la fig. 5., à condition que la première chambre pneumatique 74 soit aérée. A cet effet, il est préférable de connecter les deux chambres 74 et 82 à la même source de fluide pneumatique, de sorte que l'une des deux chambres est automatiquement aérée pendant que l'autre est mise sous pression.

Les bords extérieurs du piston 66 forment des butées de limitation du mouvement de la calotte 22, en coopération soit avec le bord de la calotte 22 lorsque la chambre 82 est sous pression comme représentée à la fig.5, soit avec l'élément annulaire 78 comme représenté sur la fig. 6 lorsque la chambre 74 est mise sous pression.

La pression règnant à l'intérieur du boîtier exerce sur la partie mobile, c.à.d. la calotte 22 et son prolongement inférieur par l'élément annulaire 78 une pression dont l'effet maximal peut correspondre à une force s'exerçant sur une surface de rayon effectif correspondant au rayon moyen du compensateur 80 étant donné qu'au-delà de ce rayon les forces sur l'élément annulaire 78 et les parties correspondantes de la calotte 22 se compensent. Par contre, les forces résultant des pressions pneumatiques dans les chambres 74 et 82 exercent leur effet sur une surface sensiblement plus grande, de sorte que la pression du fluide pneumatique ne doit pas être supérieure à la pression règnant dans le boîtier 10.

## Revendications

1. Dispositif d'obturation de conduites de transport de produits en vrac comprenant un boîtier (10) avec une ouverture de passage circulaire, un élément de fermeture (20) monté de manière pivotante dans le boîtier (10), des moyens (38) pour faire pivoter ledit élément de fermeture (22) entre une position de fermeture transversale par rapport à ladite ouverture de passage et une position latérale de dégagement de l'ouverture, un joint d'étanchéité annulaire (30) entourant ladite ouverture et pouvant coopérer avec la partie périphérique de l'élément de fermeture (20), caractérisé en ce que le joint (30) est monté sur un support fixe (32) et en ce que l'élément de fermeture (20) est déplaçable suivant un axe perpendiculaire à son axe de pivotement.

2. Dispositif selon la revendication 1, caractérisé en ce que l'élément de fermeture (20) comporte une calotte sphérique (22) portée par un support pivotant (18) autour d'un axe transversal (O) du boîtier (10), en ce qu'il est prévu une fermeture étanche entre le bord de la calotte (22) et le support (18) pour définir une première chambre étanche (56)(74) entre la calotte (22) et le support (18) et en ce que ladite chambre (56)(74) est reliée à travers le support (18) à une source de fluide pneumatique dont la pression soulève la calotte (22) de son support (18).

3. Dispositif selon la revendication 2, caractérisé en ce que la calotte (22) est portée par un piston (50) coulissant axialement dans le support (18) et en ce qu'il est prévu un ressort (52) autour dudit piston (50) dont l'action est opposée à celle du fluide pneumatique.

4. Dispositif selon la revendication 2, caractérisé en ce que le bord de la calotte (22) est relié, de manière étanche, au support (18) par l'intermédiaire d'un compensateur cylindrique (54).

5. Dispositif selon la revendication 2, caractérisé en ce que le support (18) comporte un piston (66) à surface sphérique qui s'étend en-dessous de ladite calotte sphérique (22) et dont le bord périphérique est en contact frottant, par l'intermédiaire d'un joint d'étanchéité (70) avec la surface intérieure d'une jupe cylindrique extérieure (72) faisant partie du bord périphérique de la calotte sphérique (22).

6. Dispositif selon la revendication 5, caractérisé par un élément annulaire (78) fixé par son bord extérieur à ladite jupe cylindrique (72) et s'étendant en-dessous dudit piston (66) du support et dont le bord intérieur est relié au support (18) par un compensateur (80) définissant ainsi avec la surface inférieure du piston (66) une seconde chambre étanche (82) reliée à travers le support (18) à une source de fluide pneumatique dont la pression maintient la calotte (22) sur le support (18).

7. Dispositif selon la revendication 6, caractérisé en ce que les deux chambres pneumatiques (74, 82) sont reliées à la même source de fluide pneumatique à travers une vanne de commutation.

8. Dispositif selon l'une quelconque des revendications 1 à 7, caractérisé par un racloir cylindrique (34) disposé coaxialement à l'intérieur du joint (30) et déplaçable axialement grâce à une fixation élastique (36) entre le racloir (34) et le boîtier (10).

FIG. 1

EP 0 387 514 A2

FIG. 3

FIG. 2

FIG. 4

EP 0 387 514 A2

FIG. 5

FIG. 6